# EUROPEAN PATENT SPECIFICATION

(11) **EP 2 568 523 B1**
(45) Date of publication and mention of the grant of the patent: **04.03.2015**
(21) Application number: 12181951.0
(22) Date of filing: 28.08.2012
(51) Int. Cl.: H01M 8/06, B01B 1/00

(54) **Evaporator for fuel cell**
Verdampfer für eine Brennstoffzelle
Évaporateur pour pile à combustible

(30) Priority: 06.09.2011 JP 2011194195
(43) Date of publication of application: 13.03.2013
(73) Proprietor: AISIN SEIKI KABUSHIKI KAISHA, Kariya-shi, Aichi 448-8650 (JP)
(72) Inventor: KUWABA, Koichi, Kariya-shi, Aichi 448-8650 (JP); ENDO, Satoshi, Kariya-shi, Aichi 448-8650 (JP)
(74) Representative: TBK

(56) References cited:
- CH-A- 305 828
- JP-A- 2007 289 852
- US-A1- 2004 075 181

## Description

### TECHNICAL FIELD

This disclosure generally relates to an evaporator for a fuel cell.

### BACKGROUND DISCUSSION

JP2007-289852A, hereinafter referred to as Reference 1, discloses an evaporator for a fuel cell configured to increase heat transmission area by filling an evaporating chamber with evaporation promoting materials made of ceramics. JP2005-158716A, hereinafter referred to as Reference 2, discloses fuel cell system including a reformer, which is a device for reforming fuel, in cylinder form having an axis in a lateral direction. Reference 2 discloses the reformer in cylinder form having the axis in the lateral direction, however, structure of an evaporating portion is unclear. JP2005-332762A, hereinafter referred to as Reference 3, discloses a fuel cell system in a lateral configuration including a reformer having a bottom wall protruding downward. Reference 3 discloses the reformer having the bottom wall protruding downward, however, structure of an evaporating portion is unclear.

US 2004/0075181 A1 discloses a thermal transport apparatus having an evaporation part and a condensation part. The evaporation part has a wick formed in a surface of a substrate, and a communication hole through which liquid working fluid passes when it flows into the wick. The wick and the communication hole are filled with grains to increase the capillary effect and achieve a high efficiency of thermal transport. CH 305 828 A discloses an evaporator for an absorption refrigeration apparatus. The evaporator contains metal balls for promoting evaporation of the liquid refrigerant. The metal balls are held in the evaporating chamber between two cup-shaped disks.

Anode gas, the gas supplied to an anode of a fuel cell, is the gas which includes hydrogen as a basic component. The anode gas is formed by reforming fuel with steam. In order to keep concentration level of hydrogen in the anode gas consistent, liquid state water is stably transformed into steam.

The evaporator disclosed in Reference 1 stably generates steam by conditioning water to flow downward from upward direction. Reference 2 discloses the reformer in a lateral configuration, however, structure of the evaporating portion, more specifically, structures of a bottom wall, a side wall, and a corner wall, are not disclosed. Reference 2 does not disclose about a filling, which may be made of ceramics or a similar material and functions as an evaporation promoting material. Reference 2 does not disclose whether the filling is placed in an evaporating chamber or not. As a result, whether the filling exists or the shape and the size of the filling are unclear. Reference 3 is unclear about structure of the evaporating portion. Reference 3 is unclear about the existence of a filling, which may be made of ceramics or a similar material and functions to promote evaporation, in an evaporating chamber of the evaporating portion. Each of the evaporating portions according to Reference 2 and Reference 3 is supposedly provided with the filling, which may be made of ceramics or the similar material and functions as an evaporation promoting material. Nevertheless, without information regarding the shape and the size of the filling, a possibility for liquid state reforming water to collect at certain spots in each of the evaporating portions is high, for example at an inner surface of the corner wall formed at an intersection of the bottom wall and the side wall of a box. Evaporating stability of liquid state water existing at the inner surface of the corner wall is considered unstable. The unstable evaporation of liquid state water affects reforming reaction at a reforming portion positioned on a downstream side of an evaporator because reforming reaction uses steam. In a state where the evaporation of liquid state water is unstable, concentration level of hydrogen may become inconsistent in the anode gas generated by reforming reaction at the reforming portion, which may in turn affect electricity generation reaction of a fuel cell.

A box forming an evaporator generally includes a bottom wall extending in a lateral direction and a side wall vertically arranged relative to the bottom wall. A bordering area between the bottom wall and the side wall is defined as a corner wall. The corner wall is continuously formed with the bottom wall and the side wall. The corner wall connects the bottom wall and the side wall in an intersecting state. Providing a filling at an inner surface of the corner wall is considered difficult. As a result, the inner surface of the corner wall easily becomes an empty space. The empty space at the inner surface of the corner wall may easily becomes a spot that collects liquid state reforming water supplied to an evaporating chamber or the spot where the liquid state reforming water flow into. Liquid state water existing in the spot at the inner surface of the corner wall tends to evaporate, or vaporize, with delay relative to water film adhered to surfaces of evaporation promoting materials forming the filling, which may be made of ceramics or the similar material. In some cases, liquid state water may remain in liquid state. Liquid sate water collected at the inner surface of the corner wall that relates to the bottom wall of the box forming the evaporator may evaporate irregularly, which in turn induces a pressure fluctuation in the evaporating chamber. The pressure fluctuation may affect the reforming reaction in a reformer. A composition of the anode gas generated by reforming fuel gas with steam may become inconsistent. In other words, the concentration level of hydrogen in the anode gas may become inconsistent, which may in turn affect electricity generation performance of the fuel cell.

A need thus exists for an evaporator for a fuel cell advantageous in providing stable evaporation of water in an evaporation chamber for providing stable reforming reaction and stable electricity generation by the fuel cell.

### SUMMARY

According to an aspect of this disclosure, an evaporator for a fuel cell includes a box provided with walls forming an evaporating chamber, an water supply inlet configured to supply reforming water to the evaporating chamber, and a steam outlet configured to discharge steam generated in the evaporating chamber toward a reforming portion. The evaporator for the fuel cell also includes a filling contained in the evaporating chamber, the filling formed of a plurality of evaporation promoting materials, each of the evaporation promoting materials provided with spherical form. The box includes a cross-section in a height direction provided with a bottom wall extending in a lateral direction, a side wall vertically arranged relative to the bottom wall, and a corner wall continuously formed with the bottom wall and the side wall. The corner wall connects the bottom wall and the side wall in an intersecting state. A curvature radius R1 at an inner surface of the corner wall, the inner surface facing the evaporating chamber, is larger relative to a curvature radius R2 of the evaporation promoting material. In other words a relation of R1 > R2 holds.

Accordingly, the reforming water supplied to the evaporating chamber adheres to surfaces of the evaporation promoting materials. On the surfaces of the evaporation promoting materials, the reforming water is in thin water film form instead of being collected into a mass. Providing the reforming water in thin film form promotes evaporation of the reforming water. R1 is the curvature radius at the inner surface of the corner wall that relates to the bottom wall of the box. The inner surface faces the evaporating chamber. R2 is the curvature radius, or half the size of spherical diameter, of the evaporation promoting material having spherical form. The curvature radius R1 is larger than the curvature radius R2. In other words, a relation of R1 > R2 holds. In a state where the relation of R1 > R2 holds, the evaporation promoting materials, each of which having spherical form, may be provided at the inner surface of the corner wall that relates to the bottom wall of the box with high possibility. In other words, the size of an empty space at the inner surface of the corner wall that relates to the bottom wall of the box may be reduced. Thus, a possibility for liquid state reforming water in a mass form to collect at a certain spot, particularly at the inner surface of the corner wall that relates to the bottom wall of the box, may become low. In other words, a possibility for the water to remain in liquid state at a certain spot, particularly at the inner surface of the corner wall may become low and a possibility for the liquid state water to evaporate suddenly due to an application of heat may also becomes low. An irregular evaporation of the reforming water to occur in the evaporating chamber is reduced. Accordingly, inconsistency of reforming reaction, which produces anode gas from fuel gas by using steam at the reforming portion positioned on a downstream side of the evaporator, is restrained. The concentration level of hydrogen becomes consistent in the anode gas, which is produced at the reforming portion by steam reforming. In other words, composition of the anode gas becomes consistent and the fuel cell provides stable electricity generation reaction.

According to another aspect of this disclosure, the evaporator for the fuel cell includes an inner surface of the bottom wall slanting downward with an increasing distance from the corner wall.

Accordingly, in a situation where excessive liquid state water exists at the inner surface of the corner wall, the water may flow downward forming water film along the slanted surface on the inner surface of the bottom wall.

According to further aspect of this disclosure, the evaporator for the fuel cell includes an inner surface of the side wall slanting outward with an increasing distance from the corner wall.

Accordingly, the high temperature exhaust gas becomes easier to contact the outer surface of the side wall. Improving heating efficiency of the side wall improves evaporation in the evaporating chamber.

According to another aspect of this disclosure, the evaporator for the fuel cell includes the evaporation promoting material formed with ceramics as base material.

Using ceramics as the base material for the evaporation promoting materials restrains forming of rust on the evaporation promoting materials and oxidation of the evaporation promoting materials. Ceramics to be used may be oxide system, nitride system, carbide system, or similar. Alumina, silica, silicon carbide, zirconia, mullite, titania, and spinel are examples of known ceramics that may be used. Ceramics may be either non-porous or porous. The evaporation promoting materials may be solid ceramics, or hollow, for example ceramics balloon, for a purpose of reducing weight.

According to further aspect of this disclosure, the evaporator for the fuel cell includes the filling including plural types of the evaporation promoting materials having different sizes.

Providing the evaporation promoting materials having smaller sizes at the inner surface of the corner wall makes reduction of empty space at the inner surface of the corner wall 333 easier,

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a top view of an evaporator for a fuel cell according to a first embodiment illustrating basic portions in a periphery of the evaporator having a structure integrated with a reformer;
Fig. 2 is a cross-sectional view of the evaporator for the fuel cell according to the first embodiment taken in a height direction along a line II-II in Fig. 1;
Fig. 3 is a cross-sectional view of the evaporator for the fuel cell according to the first embodiment with a corner wall portion being enlarged;
Fig. 4 is a cross-sectional view of the evaporator for the fuel cell according to a second embodiment with the corner wall portion being enlarged;
Fig. 5 is a cross-sectional view of the evaporator for the fuel cell according to a third embodiment with the corner wall portion being enlarged;
Fig. 6 is a cross-sectional view of the evaporator for the fuel cell according to a fourth embodiment with the corner wall portion being enlarged; and
Fig. 7 is a schematic drawing showing the fuel cell system including the evaporator for the fuel cell according to applicable embodiments.

### DETAILED DESCRIPTION

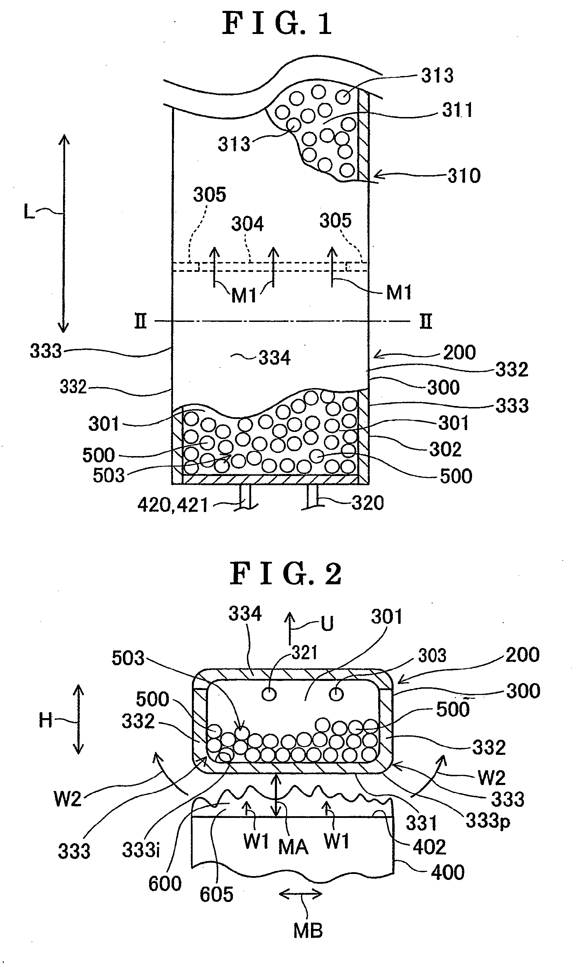

An evaporator 200 for a fuel cell according to a first embodiment will be described referring to Figs. 1 to 3. As Fig. 1 illustrates, the evaporator 200 is a unit In a lateral configuration. In the evaporator 200 in the horizontal configuration, steam and fuel gas flow in a horizontal direction rather than in a vertical direction. The evaporator 200 includes a box 300 having an elongated form. A height direction for the box 300 is indicated with an arrow H. A longitudinal direction for the box 300 is indicated with an arrow L. The box 300 includes walls 302 forming an evaporating chamber 301, an water supply inlet 303 configured to supply liquid state reforming water to the evaporating chamber 301, and a steam outlet 304 configured to discharge steam generated, or produced, in the evaporating chamber 301. The water supply inlet 303 is formed with an water supply piping 421 forming an water supply flow channel 420. The evaporating chamber 301 contains a filling 503 including a multiple number of evaporation promoting materials 500 made of ceramics in spherical form. Each of the evaporation promoting materials 500 promotes evaporation, or vaporization, of water, which is adhered to a surface of each of the evaporation promoting materials 500 in water film form. In other words, the evaporation promoting materials 500 promote, or accelerate, evaporation of reforming water by increasing the surface area of the reforming water. The evaporation promoting material 500 is formed with ceramics as base material, a material having thermal storage behavior. Accordingly, the evaporation promoting materials 500 stabilize temperature in the evaporating chamber 301, which in turn enhances stability of evaporation. The evaporation promoting materials 500 are filled in the evaporating chamber 301 to an amount such that the water supply inlet 303 configured to supply reforming water and a gas inlet 321 configured to supply fuel gas remain uncovered.

The evaporator 200 is integrally formed with a reformer, and functions as the reformer at the same time. Accordingly, the box 300 includes a reforming portion 310 having a reforming chamber 311 adjacent to the evaporating chamber 301 with a partition wall 305 therebetween. The partition wall 305 is provided with a steam outlet 304 configured to allow steam to flow into the reforming chamber 311. Steam generated in the evaporating chamber 301 flows in a direction indicated with arrows M1 and may flow into the reforming chamber 311 through the partition wall 305 and the steam outlet 304. The reforming chamber 311 contains a multiple number of ceramics carriers 313. Each of the ceramics carriers 313 is in spherical form and carries a catalyst for reforming, which promotes reforming reaction of fuel gas. A fuel gas flow channel 320 connects to the box 300. A hydrocarbon-based fuel gas supplied from the fuel gas flow channel 320 via the gas inlet 321 flows through the evaporating chamber 301 and then flows into the reforming chamber 311 via the steam outlet 304. In the reforming chamber 311, fuel gas undergoes steam reforming, which produces anode gas composed mostly of hydrogen. Methane series, propane series, butane series are examples of hydrocarbon-based fuel gases. In a case where the fuel gas is methane series having a chemical symbol CH₄, the fuel gas undergoes steam reforming according to a reaction of the following formula CH₄ + H₂O → CO + 3H₂, which is an endothermic reaction, so that the anode gas composed mostly of hydrogen is produced.

In a case a stack 400 is a solid oxide type, H₂ and CO contribute to a reaction that generates electricity. Fig. 2 illustrates a cross-sectional view of the box 300, which includes the evaporator 200, taken in the height direction indicated with the arrow H. As Fig. 2 illustrates, the box 300, which includes the evaporator 200, is provided with a bottom wall 331 made of metal extending in a lateral direction, in other words a horizontal direction. The box 300 further includes side walls 332 made of metal. Each of the side walls 332 is vertically arranged relative to the bottom wall 331. The box 300 also includes corner walls 333 made of metal. Each of the corner walls 333 is continuously formed with the bottom wall 331 and the side wall 332. Each of the corner walls 333 connects the bottom wall 331 and the side wall 332 in an intersecting state. The box 300 further includes a top wall 334 made of metal extending in the lateral direction, or the horizontal direction. The top wall 334 is in a flat form and provided substantially parallel to the bottom wall 331. The top wall 334 may be a top cover fixed to the side walls 332 by welding or a similar method.

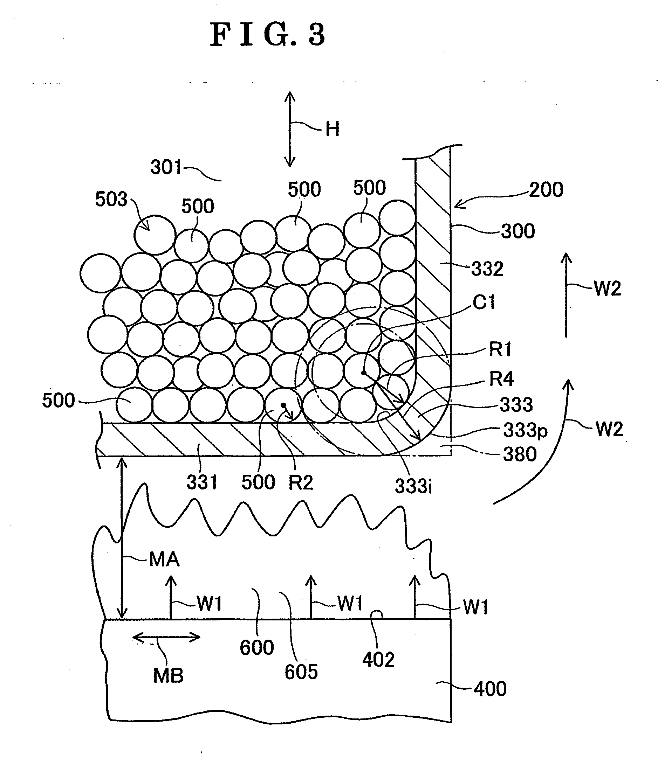

As Fig. 3 illustrates, C1 is a center of a curvature at an inner surface 333i of the corner wall 333. The inner surface 333i faces the evaporating chamber 301. R1 is a curvature radius at the inner surface 333i of the corner wall 333. The curvature radius R1 is defined as the curvature radius at a portion of the corner wall 333, which is the portion of the points of reverse curve, where the curvature of the inner surface 333i changes. R2 is a curvature radius of the evaporation promoting material 500 having spherical form. The curvature radius R1 is larger than the curvature radius R2. In other words, a relation of R1 > R2 holds. A ratio between the curvature radius R1 and the curvature radius R2, which is also expressed as R1/R2, is defined for example as an arbitrary value between 1.2 and 10. The ratio may be defined as an arbitrary value between 1.5 and 7. The curvature radius R2 of each of the evaporation promoting materials 500 may be defined as a length between 0.2 mm and 20 mm. The curvature radius R2 of each of the evaporation promoting materials 500 may be defined as a length between 0.3 mm and 10 mm. An appropriate length of the curvature radius R2 of the evaporation promoting material 500 is not limited to the aforementioned length and may be selected according to the type of the evaporator 200. The evaporation promoting material 500 is provided in a multiple number, however, providing each of the evaporation promoting materials 500 with a same size contributes to restrain irregular generation of steam.

In a state where the curvature radius R2 of the evaporation promoting material 500 having spherical form is excessively small, the size of each of the evaporation promoting materials 500 becomes excessively small. In a state where the size of each of the evaporation promoting materials 500, is excessively small, a clearance between adjacent evaporation promoting materials 500, where liquid state reforming water or steam flows through becomes excessively small, so that permeation of reforming water in liquid state or in vapor state may be inhibited. In a state where the curvature radius R2 of the evaporation promoting material 500 having spherical form is excessively large, the size of each of the evaporation promoting materials 500 becomes excessively large. When the size of each of the evaporation promoting materials 500 becomes excessively large, the curvature radius R2 approaches the curvature radius R1 and may even become larger than the curvature radius R1. R4 is a curvature radius at an outer surface 333p of the corner wall 333. The outer surface 333p of the corner wall 333 is positioned outward relative to the inner surface 333i of the corner wall 333, therefore, R4 is generally larger than R1 or substantially equal to R1. In a state where the curvature radius R1 at the inner surface 333i of the corner wall 333 is excessively large, the curvature radius R4 at the outer surface 333p of the corner wall 333 becomes larger, which results in reducing a surface area for receiving heat from combustion flame 605 from a combusting portion 600.

According to the first embodiment of the evaporator 200 for the fuel cell, supplying liquid state reforming water to the reforming chamber 311 is generally restrained. As a result, the corner wall 333 having the relation of R1 > R2 is substantially unnecessary in the reforming chamber 311. Nevertheless, evaporator 200 is integrally formed with a function of a reformer, therefore, the corner wall 333 in the reforming chamber 311 may be provided with the curvature radiuses having the relation R1 > R2 due to a consideration of a manufacturing process.

The box 300 may be formed by press forming a metal plate by using a press forming machine. In other words, the bottom wall 331, the side walls 332, and the corner walls 333 may also be formed by press forming the metal plate by using the press forming machine. The metal plate may be a carbon steel, a steel alloy including a stainless steel, a titanium alloy, a copper alloy or a similar metal.

As Fig. 2 illustrates, the stack 400 formed of a multiple number of fuel cells is provided in the downward direction of the bottom wall 331 of the box 300. The combusting portion 600 is formed between the stack 400 and the box 300. In order for the combustion flame 605 produced in the combusting portion 600 to uniformly heat the bottom wall 331, a distance MA, which is the distance between a top surface 402 of the stack 400 and the bottom wall 331 of the box 300, is provided with substantially equivalent distance along a width direction of the top surface of the stack 400, the direction that is indicated with an arrow MB in Fig. 2. The fuel cell may be a type known as a solid oxide fuel cell, which may be abbreviated as SOFC. In a case where the fuel cell is solid oxide type, the fuel cell includes zirconia series anode containing Ni and/or NiO and rare-earth elements, zirconia series electrolyte film containing rare-earth elements, and a perovskite-type cathode.

From the top surface 402 of the stack 400, anode off-gas is discharged in a direction indicated by arrows W1 toward the combusting portion 600, which is where the anode off-gas is combusted, so that the combustion flame 605 is produced. Combustion flame of hydrogen is not visible with naked eyes. The anode off-gas is a gas discharged from the stack 400, and is flammable because the anode off-gas contains hydrogen unconsumed in the reaction for generating electricity. The combusting portion 600 is provided with an ignition portion. Combustion in the - combusting portion 600 applies heat to the bottom wall 331 of the box 300. An exhaust gas having high temperature due to the combustion and an anode off-gas uncombusted at the combusting portion 600, which is flammable, flow in directions indicated by arrows W2 along outer surfaces 332p of the side walls 332 of the box 300, the side walls 332 facing each other, and applies heat to the side walls 332. The heat applied to the side walls 332 promote evaporation in the evaporating chamber 301 as a whole. The high temperature exhaust gas and/or the anode off-gas, which is flammable, contact the top wall 334 of the box 300, so that the evaporating chamber 301 is further applied with heat from the top wall 334.

According to the first embodiment of the evaporator 200 for the fuel cell, the reforming water supplied to the evaporating chamber 301 adheres to the surfaces of the evaporation promoting materials 500, each of which is formed with ceramics as the base material. On the surfaces of the evaporation promoting materials 500, the reforming water is in a thin water film form instead of being collected into a mass. Providing the reforming water in thin water film form promotes evaporation of the reforming water. According to the first embodiment of the evaporator 200 for the fuel cell, R1 is the curvature radius at the inner surface 333i of the corner wall 333 that relates to the bottom wall 331 of the box 300. The inner surface 333i faces the evaporating chamber 301. R2 is the curvature radius of the evaporation promoting material 500 having spherical form. The curvature radius R1 is larger than the curvature radius R2. In other words, a relation of R1 > R2 holds. Accordingly, as Fig. 3 illustrates, the evaporation promoting materials 500, each of which having spherical form, may be efficiently arranged at the inner surface 333i of the corner wall 333 that relates to the bottom wall 331 of the box 300. In other words, an empty space at the inner surface 333i of the corner wall 333 that relates to the bottom wall 331 of the box 300 may be reduced. Thus, a possibility for collecting liquid state reforming water, hereinafter simply referred also to as water, in mass form at a certain spot, particularly at the inner surface 333i of the corner wall 333 that relates to the bottom wall 331 of the box 300, may become low. In other words, a possibility for the water to remain in liquid state at a certain spot, particularly at the inner surface 333i of the corner wall 333 that relates to the bottom wall 331, may become low and a possibility for the liquid state water to evaporate suddenly due to an application of heat may also becomes low. An irregular evaporation of the reforming water to occur in the evaporating chamber 301 is reduced, thus, a sudden pressure fluctuation in the evaporating chamber 301 is restrained.

In the state where the evaporation of liquid state water is stable, inconsistency of reforming reaction, which produces anode gas from fuel gas by using steam at the reforming portion 310 positioned on a downstream side of the evaporator 200, is restrained. The concentration level of hydrogen becomes consistent in the anode gas, which is produced at the reforming portion 310 by steam reforming. In other words, composition of the anode gas becomes consistent. Supplying the anode gas with consistent composition to the anode of the fuel cell provides stable electricity generation reaction in the stack 400 of the fuel cell.

The filling 503 including the evaporation promoting materials 500 in spherical form is formed with ceramics as base material. Using ceramics restrains deterioration of the filling 503, for example, surface oxidization and melting, in a case where the walls 302 of the evaporator 200 is heated to high temperature. Alumina, silica, silicon carbide, zirconia, mullite, titania, and spinel are some of the examples of known ceramics that may be used. Ceramics may be either non-porous or porous. With a non-porous ceramics, a state where the water being excessively absorbed to the ceramics is restrained. With a porous ceramics, water retention characteristic is improved. The curvature radius R2 of the evaporation promoting material 500 having spherical form may be made to between 0.3 mm to 10 mm. The curvature radius R2 of the evaporation promoting material 500 having spherical form may be made to between 0.7mm to 5 mm. The curvature radius R2 may not be limited to the aforementioned values, but may be changed accordingly. Spherical form of the evaporation promoting material 500 includes substantially spherical forms. When the evaporation promoting material 500 having substantially spherical form is cut through the center in multiple directions and then diameters are measured on each surface in multiple directions, variation of diameters is equal to or less than 40%. The evaporation promoting material 500 having substantially spherical form may be provided with the variation of diameters equal to or less than 30%, 20%, or 10%. In a case where each of the evaporation promoting material 500 is in slightly elongated spherical form or in largely elongated spherical form, the relation of R1 > R2 holds, where R2 represents the radius in the longer direction. The evaporation promoting material 500 having spherical form is advantageous in reducing inconsistencies of clearances between adjacent evaporation promoting materials 500 and contributes to reduce irregular evaporation of water.

Due to a gravitational reason, water is not collected toward the top wall 334. Accordingly, a corner wall related to the top wall 334 of the box 300, if there is one, may or may not be provided with a structure, or configurations and relations, described in this disclosure. The corner wall related to the top wall 334 of the box 300 may be provided with the structure described in this disclosure due to manufacturing process reasons.

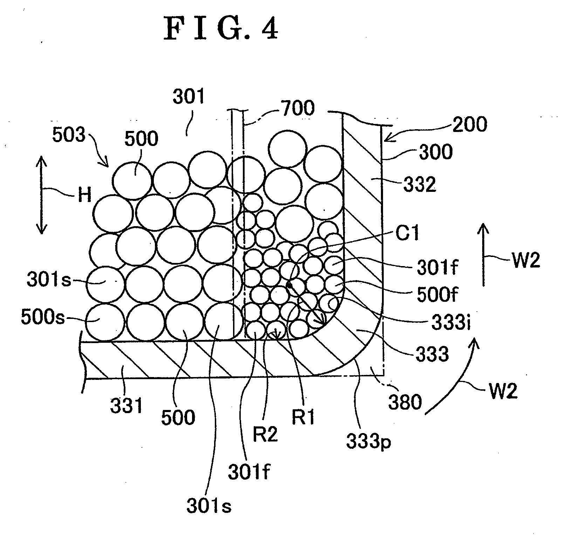

The evaporator 200 for the fuel cell according to a second embodiment will be described next. Fig. 4 illustrates the evaporator 200 for the fuel cell according to the second embodiment. The second embodiment is basically similar to the first embodiment in configuration and like parts and configurations of the second embodiment provide behaviors and advantages similar to those of the first embodiment. The filling 503 includes multiple types of evaporation promoting materials 500, each of which is made of ceramics as basic material, having different sizes. In a manufacturing process, a partition member 700 is placed in the evaporating chamber 301. The evaporating chamber 301 is separated into a first chamber 301f, which is a chamber close to the corner wall 333, and a second chamber 301 s, which is a chamber away from the corner wall 333. A first evaporation promoting material 500f, which is made of ceramics as basic material and formed in spherical form, is smaller in size relative to a second evaporation promoting material 500s. The first evaporation promoting materials 500f are placed in the first chamber 301f. The second evaporation promoting material 500s, which is made of ceramics as the basic material and formed in spherical form, is larger in size relative to the first evaporation promoting material 500f. The second evaporation promoting materials 500s are placed in the second chamber 301s. Then, partition member 700 is removed from the evaporating chamber 301.

The first evaporation promoting materials 500f and the second evaporation promoting materials 500s are densely arranged, so that the first evaporation promoting materials 500f are kept form excessively mixing with the second evaporation promoting materials 500s in a state where the partition member 700 is removed. Accordingly, the first evaporation promoting materials 500f, each of which is made of ceramics as basic material and formed In spherical form and having smaller size relative to the second evaporation promoting material 500s, are easily gathered at the inner surface 333i of the corner wall 333. After providing the evaporation chamber 301 with the first evaporation promoting materials 500f and the second evaporation promoting materials 500s in such state, assembly of evaporator 200 proceeds to completion.

As an advantage, the first evaporation promoting materials 500f, each of which is made of ceramics as basic material and formed in spherical form, having smaller size relative to the second evaporation promoting material 500s and having the curvature radius R2, are easily gathered at the inner surface 333i of the corner wall 333. Accordingly, the relation of R1 > R2 is provided with less effort, where R1 represents the curvature radius at the inner surface 333i of the corner wall 333 that relates to the bottom wall 331 of the box 300, where the inner surface 333i faces the evaporating chamber 301, and where R2 represents the curvature radius of the evaporation promoting material 500. In addition, the curvature radius R1 at the inner surface 333i of the corner wall 333 may be made relatively smaller, so that a dead space 380 outside the corner wall 333 may be made smaller. Therefore, while reducing the size of the box 300, filling efficiency of the evaporation promoting material 500 may be improved. Reducing the dead space 380 increases the area the bottom wall 331 receives heat, which improves efficiency of heat applied to the evaporator 200.

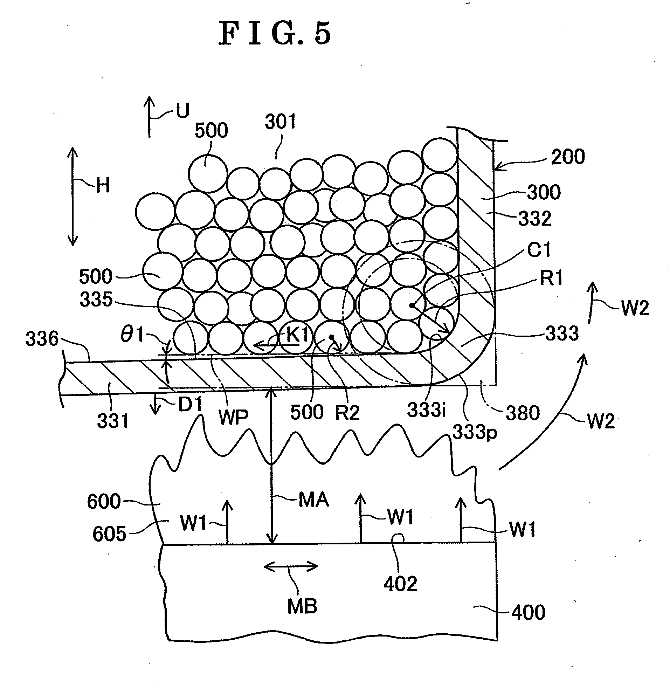

The evaporator 200 for the fuel cell according to a third embodiment will be described next. Fig. 5 illustrates the evaporator 200 for the fuel cell according to the third embodiment. The third embodiment is basically similar to the first embodiment in configuration and like parts and configurations of the third embodiment provide behaviors and advantages similar to those of the first embodiment. According to the third embodiment of the evaporator 200 for the fuel cell, the relation of R1 > R2 holds where R1 represents the curvature radius at the inner surface 333i of the corner wall 333 related to the bottom wall 331 of the box 300, where the inner surface 333i faces the evaporating chamber 301, and where R2 represents the curvature radius of the evaporation promoting material 500. In addition, the inner surface of the bottom wall 331 slants downward in a direction of an arrow D1 with an increasing distance from the corner wall 333 in the lateral direction. The inner surface of the bottom wall 331 is provided with a slanted surface 335 that slants downward with an angle θ1 relative to a virtual horizontal line WP. The inner surface of the bottom wall 331 is further provided with a continuous surface 336 continuous with the slanted surface 335 that horizontally extends along the virtual horizontal line WP. In a situation where excessive liquid state water exists at the inner surface 333i of the corner wall 333, the water may slowly flows downward in a direction of an arrow K1 forming waterfilm along the slanted surface 335 on the inner surface of the bottom wall 331 for promoting evaporation. The angle θ1 may be provided with a very small angle having an arbitrary value between 0.05 degrees to 10 degrees. The angle θ1 may be provided with an angle having an arbitrary value between 0.1 degrees to 5 degrees. Because the angle θ1 is kept small, the water at the corner wall 333 may flow downward forming water film along the slanted surface 335, however, the bottom wall 331 is substantially horizontal along the virtual horizontal line WP. Accordingly, the distance MA between the top surface 402 of the stack 400 and the bottom wall 331 of the box 300 may be restrained from fluctuating, so that heat applied to the bottom wall 331 may be restrained from fluctuating.

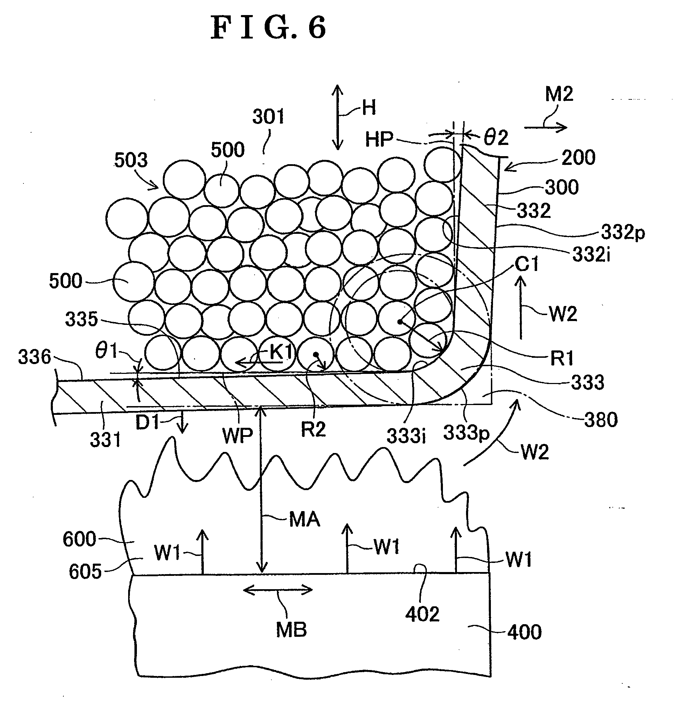

The evaporator 200 for the fuel cell according to a fourth embodiment will be described next. Fig. 6 illustrates the evaporator 200 for the fuel cell according to the fourth embodiment. The fourth embodiment is basically similar to the first to third embodiments in configurations and like parts and configurations of the fourth embodiment provide behaviors and advantages similar to those of the first to third embodiments. According to the fourth embodiment of the evaporator 200 for the fuel cell, the relation of R1 is larger than R2, also expressed as R1 > R2, holds where R1 represents the curvature radius at the inner surface 333i of the corner wall 333 that relates to the bottom wall 331 of the box 300, where the inner surface 333i faces the evaporating chamber 301, and where R2 represents the curvature radius of the evaporation promoting material 500. In addition, as Fig. 6 illustrates, the inner surface 332i of the side wall 332 slants in a lateral direction, which is in a direction of an arrow M2, with an increasing distance in the height direction H from the corner wall 333. The inner surface 332i of the side wall 332 slants with an angle θ2 relative to a virtual vertical line HP such that the upper portion of the side walls 332 spread outward. Accordingly, the high temperature exhaust gas that flows in the direction of the arrow W2 becomes easier to contact the outer surface 332p of the side wall 332. Improving heating efficiency of the side wall 332 improves evaporation in evaporating chamber 301. The angle θ2 may be provided with an angle having an arbitrary value between 0.5 degrees to 15 degrees. The angle 92 may be provided with an angle having an arbitrary value between 1 degree to 10 degrees.

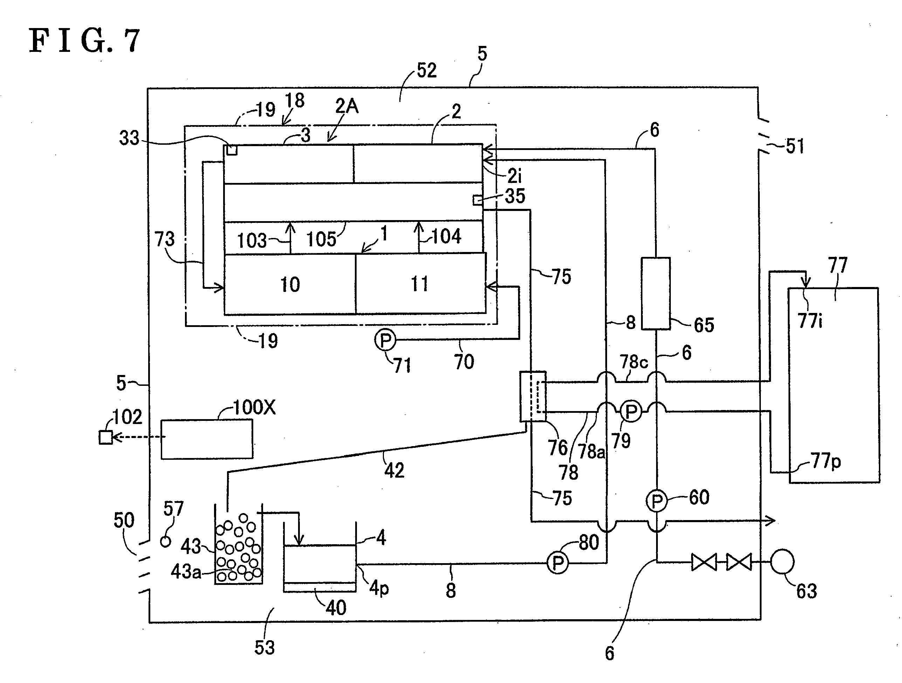

An applied configuration of the evaporator 200 for the fuel cell will be described next. Fig. 7 is a schematic drawing showing the fuel cell system including the evaporator 200 for the fuel cell according to this disclosure. As Fig. 7 illustrates, the fuel cell system includes a stack 1, an evaporating portion 2 where steam is produced by evaporating liquid state water, a reforming portion 3 where the steam produced in the evaporating portion 2 reforms fuel for generating, or producing, anode gas, a water tank 4 where liquid state water is stored for supplying water to the evaporating portion 2, and a case 5 configured to contain the aforementioned components. The stack 1 includes an anode 10 and a cathode 11 with an ion conductor in between. The stack 1 is also known as a solid oxide fuel cell, which may be abbreviated as SOFC, which operates at a temperature, for example, equal to or more than 400 °C. The reforming portion 3 adjoining the evaporating portion 2 includes carriers made of ceramics or a similar material carrying reforming catalyst. The reforming portion 3 and the evaporating portion 2 forms the reformer 2A. The reformer 2A and the stack 1 is surrounded by a heat insulating wall 19 to form an electricity generating module 18. In the electricity generating module 18, a combusting portion 105 is provided for heating the reforming portion 3 and the evaporating portion 2. An anode exhaust gas discharged from a direction of the anode 10 is supplied to the combusting portion 105 via a flow channel 103. A cathode exhaust gas discharged from a direction of the cathode 11 is supplied to the combusting portion 105 via a flow channel 104. At the time of system startup, the combusting portion 105 bums, or combusts, a gas before reforming supplied from the anode 10 with cathode gas supplied from the cathode 11 and heats the evaporating portion 2 and the reforming portion 3.

During the time of generating electricity, the anode exhaust gas discharged from the anode 10, which is referred to as a fuel pole, is combusted at the combusting portion 105 with the cathode exhaust gas discharged from the cathode 11, which is referred to as an oxidant pole, and applies heat to the evaporating portion 2 and the reforming portion 3. The combusting portion 105 is provided with an exhaust gas flow channel 75. A combustion exhaust gas, which includes a gas after the combustion at the combusting portion 105 and an uncombusted gas, is discharged into air via the exhaust gas flow channel 75. The reforming portion 3 is provided with a temperature sensor 33 configured to detect temperature at the reforming portion 3. An ignition portion 35, which is a heater for starting a flame, is provided at the combusting portion 105. The ignition portion 35 may be different from the aforementioned heater when the substitute item functions to start a flame. The fuel cell system is provided with an outside air temperature sensor 57, a temperature sensor configured to detect temperature of an outside air. Signals form the aforementioned temperature sensors 33, 57, are transmitted to a control portion 100X as inputs. The control portion 100X outputs a signal for initiating warning to a warning device 102.

During the time of generating electricity, the reformer 2A is heated inside the heat insulating wall 19 for providing an appropriate environment for reforming reaction to occur. During the time of generating electricity, the evaporating portion 2 heats water so that water transforms into steam. In a case where the stack 1 is SOFC, the anode exhaust gas discharged from the direction of the anode 10 and the cathode exhaust gas discharged from the direction of the cathode 11 are combusted at the combusting portion 105, so that the reforming portion 3 and the evaporating portion 2 are simultaneously heated within the electricity generating module 18. As Fig .7 illustrates, a gas flow channel 6 is a channel provided for supplying a gas from a gas source 63 to the reformer 2A. Accordingly, the gas flow channel 6 is provided with a pump 60 and a desulfurizing device 65. The cathode 11 of the stack 1 connects with the cathode gas flow channel 70 configured to supply the cathode gas, or air, to the cathode 11. The cathode gas flow channel 70 is provided with a cathode pump 71, a pump that functions as a means for delivering the cathode gas.

As Fig. 7 illustrates, the case 5 includes an intake opening 50 communicating with outside air and an exhaust opening 51. The case 5 further includes an upper chamber space 52, which is referred to as a first chamber, and a lower chamber space 53, which is referred to as a second chamber. The stack 1, the reforming portion 3, and the evaporating portion 2 are components forming the electricity generating module 18. The electricity generating module 18 is housed, or contained, in the upper chamber space 52, which is an upper portion of the case 5. The lower chamber space 53 of the case 5 contains the water tank 4 where liquid state water used for reforming at the reforming portion 3 is stored. The water tank 4 is provided with a heating portion 40 having a heating function. An electric heater is an example of the heating portion 40. The heating portion 40 heats water stored in the water tank 4, Accordingly, the heating portion 40 is formed with an electric heater or a similar device. In an environment where an ambient temperature, for example outside air temperature, is low, the heating portion 40 heats water in the water tank 4 to a temperature equal to or more than a predetermined temperature by following the instruction from the control portion 100X so that prevents water from freezing. As Fig. 7 illustrates, a piping for communicating an outlet port 4p of water tank 4 in the lower chamber space 53 and an inlet port 2i of the evaporating portion 2 in the upper chamber space 52 is provided in the case 5. An water supply flow channel 8 is a flow channel for supplying water stored in the water tank 4 to the evaporating portion 2. The water supply flow channel 8 is provided with a pump 80, which functions as a means for delivering water in the water tank 4 to the evaporating portion 2. Moreover, the control portion 100X controls pumps 80, 71, 79, 60 in the fuel cell system.

At the time of system startup, in a state where the pump 60 is driven to function, a gas from a gas source 63 flows through a gas flow channel 6 into the combusting portion 105 via the evaporating portion 2, the reforming portion 3, an anode gas flow channel 73, the anode 10 of the stack 1, and the flow channel 103. The cathode pump 71 works to flow the cathode gas, or air, into the combusting portion 105 via the cathode gas flow channel 70, cathode 11, and the flow channel 104. Igniting the ignition portion 35 in this state results in combustion at the combusting portion 105, so that the reforming portion 3 and the evaporating portion 2 are heated. In the state where the reforming portion 3 and the evaporating portion 2 are applied with heat, and pump 80 is driven to function, the water in the water tank 4 is delivered through the water supply flow channel 8 from the outlet port 4p of water tank 4 toward the inlet port 2i of the evaporating portion 2. At the evaporating portion 2, the water is heated to become steam. The steam moves to the reforming portion 3 with the gas supplied from the gas flow channel 6. The gas is reformed by steam at the reforming portion 3 and becomes anode gas, a gas containing hydrogen. The anode gas is supplied to the anode 10 of the stack 1 via the anode gas flow channel 73. In addition, cathode gas, a gas containing oxygen, which is air in the case 5, is supplied to the cathode 11 of the stack 1 via the cathode gas flow channel 70. As a result, the stack 1 generates electricity. The anode off-gas discharged from the anode 10 and the cathode off-gas discharged from the cathode 11 reaches the combusting portion 105 via the flow channel 103 and the flow channel 104 respectively, and then combusted at the combusting portion 105. High temperature exhaust gas is discharged out of the case 5 through the exhaust gas flow channel 75.

During the time of generating electricity by the aforementioned system, and the pump 80 is driven to function, the water in the water tank 4 is delivered through the water supply flow channel 8 from the outlet port 4p of water tank 4 toward the inlet port 2i of the evaporating portion 2. At the evaporating portion 2, the water is heated to become steam. The steam moves to the reforming portion 3 with the gas supplied from the gas flow channel 6. The gas is reformed by steam at the reforming portion 3 and becomes the anode gas, the gas containing hydrogen. In a condition where fuel is methane series, the anode gas produced by steam reforming is considered a result of following formula (1). Fuel is not limited to methane series. Fuel may be propane series or similar.

(1) CH₄ + 2H₂O → 4H₂ + CO₂ CH₄ + H₂O → 3H₂ + CO

The anode gas produced is supplied to the anode 10 of the stack 1 via the anode gas flow channel 73. In addition, the cathode gas, the gas containing oxygen, which is air in the case 5, is supplied to the cathode 11 of the stack 1 via the cathode gas flow channel 70. As a result, the stack 1 generates electricity. High temperature exhaust gas discharged from the stack 1 is discharged out of the case 5 through the exhaust gas flow channel 75.

The exhaust gas flow channel 75 is provided with a heat exchanger 76 having a condensing function. Between the heat exchanger 76 and a hot water reservoir 77, a stored hot water flow channel 78 that connects to the hot water reservoir 77 and a hot water reservoir pump 79 are provided. The stored hot water flow channel 78 includes an outward channel 78a and a return channel 78c. In a state where the hot water reservoir pump 79 is at work, low temperature water in the hot water reservoir 77 is discharged from a discharge port 77p of the hot water reservoir 77. The low temperature water is delivered through the outward channel 78a reaches the heat exchanger 76 and heated by the heat exchanger 76. Hot water heated by the heat exchanger 76 returns to the hot water reservoir 77 from the return port 77i through the return channel 78c. The water in the hot water reservoir 77 is changed to hot water through such process. The steam contained in the aforementioned exhaust gas from the stack 1 is condensed by the heat exchanger 76 and becomes condensed water. The condensed water is supplied to a water purifier 43 by gravity through a condensed water flow channel 42 that extends from the heat exchanger 76. The water purifier 43 includes a water purifying agent 43a, for example an ion-exchange resin, so that impure substances in the condensed water is removed. Water with impure substances removed moves to the water tank 4 and stored in the water tank 4. In a state where the pump 80 starts working, the water in the water tank 4 is supplied to the evaporating portion 2 in high temperature via the water supply flow channel 8, changed to steam at the evaporating portion 2 and supplied to the reforming portion 3, and then consumed in the reforming reaction which reforms fuel at the reforming portion 3. In the applied configuration of the evaporator 200 for the fuel cell, the structure of the evaporating portion 2 is according to an embodiment of the evaporator 200 for the fuel cell disclosed in this disclosure. In other words, the relation of R1 > R2 holds.

The evaporator 200 for the fuel cell may be modified or enhanced in following manners from the embodiments described above with references to drawings. Different types of ceramics may be mixed to form the evaporation promoting materials 500 that form the filling 503. The fuel cell stack may be a type different from solid oxide fuel cell, for example, solid polymer electrolyte fuel cell, phosphoric acid fuel cell, or molten carbonate fuel cell. The evaporator 200 is integrated with the reforming portion 310, however, the evaporator 200 and the reforming portion 310 may be independently provided. Fuel supplied to the reformer is not limited to a certain type. Fuel may be selected from, for example, city gas, propane gas, biogas, LPG gas, CNG gas, and alcohol.

According to an aspect of this disclosure, an evaporator 200 for a fuel cell includes a box 300 provided with walls 302 forming an evaporating chamber 301, an water supply inlet 303 configured to supply reforming water to the evaporating chamber 301, and a steam outlet 304 configured to discharge steam generated in the evaporating chamber 301 toward a reforming portion 310. The evaporator 200 for the fuel cell further includes a filling 503 contained in the evaporating chamber 301. The filling 503 is formed of a multiple number of evaporation promoting materials 500. Each of the evaporation promoting materials 500 is provided with spherical form. The box 300 includes a cross-section in height direction H of the evaporator 200 for the fuel cell provided with a bottom wall 331 extending in a lateral direction, a side wall 332 vertically arranged relative to the bottom wall 331, and a corner wall 333 continuously formed with the bottom wall 331 and the side wall 332, the corner wall 333 connecting the bottom wall 331 and the side wall 332 in an intersecting state.

An evaporator (200) for a fuel cell includes a box (300) provided with an evaporating chamber (301) and a filling (503) formed of a plurality of evaporation promoting materials (500). Each of the evaporation promoting materials (500) formed with ceramics as base material is provided with spherical form. The box (300) is provided with a bottom wall (331), a side wall (332), and a corner wall (333) connecting the bottom wall (331) and the side wall (332) in an intersecting state. A curvature radius R1 at an inner surface (333i) of the corner wall (333), the inner surface (333i) facing the evaporating chamber (301), is larger relative to a curvature radius R2 of the evaporation promoting material (500). In other words, a relation of R1 > R2 holds.

## Claims

1. An evaporator (200) for a fuel cell, comprising:
a box (300) provided with walls (302) forming an evaporating chamber (301), an water supply inlet (303) configured to supply reforming water to the evaporating chamber (301), and a steam outlet (304) configured to discharge steam generated in the evaporating chamber (301) toward a reforming portion (310); and
a filling (503) contained in the evaporating chamber (301), the filling (503) formed of a plurality of evaporation promoting materials (500), each of the evaporation promoting materials (500) provided with spherical form,
the box (300) including a cross-section in a height direction (H) provided with a bottom wall (331) extending in a lateral direction, and a side wall (332) vertically arranged relative to the bottom wall (331)
**characterized in that**
the box (300) includes a corner wall (333) continuously formed with the bottom wall (331) and the side wall (332), the corner wall (333) connecting the bottom wall (331) and the side wall (332) in an intersecting state, wherein a curvature radius R1 at an inner surface (333i) of the corner wall (333), the inner surface (333i) facing the evaporating chamber (301), is larger relative to a curvature radius R2 of the evaporation promoting material (500), that is a relation of R1 > R2 holds.

2. The evaporator (200) for the fuel cell according to Claim 1, wherein an inner surface of the bottom wall (331) slants downward with an increasing distance from the corner wall (333).

3. The evaporator (200) for the fuel cell according to Claims 1 or 2, wherein an inner surface (332i) of the side wall (332) slants outward with an increasing distance from the corner wall (333).

4. The evaporator (200) for the fuel cell according to any one of Claims 1 to 3, wherein the evaporation promoting material (500) is formed with ceramics as base material.

5. The evaporator (200) for the fuel cell according to any one of Claims 1 to 4, wherein the filling (503) includes plural types of the evaporation promoting materials (500) having different sizes.

## Patentansprüche

1. Verdampfer (200) für eine Brennstoffzelle, mit:
einem Kasten (300), der mit Wänden (302) ausgestattet ist, die eine Verdampfungskammer (301), einen Wasserzufuhreinlass (303), der so gestaltet ist, dass er der Verdampfungskammer (301) Reformierwasser zuführt, und einen Dampfauslass (304) bilden, der so gestaltet ist, dass er in der Verdampfungskammer (301) erzeugten Dampf an einen Reformierabschnitt (310) abgibt; und
einer Füllung (503), die in der Verdampfungskammer (301) enthalten ist, wobei die Füllung (503) von einer Vielzahl von die Verdampfung fördernden Materialien (500) gebildet wird, von denen jedes mit einer kugeligen Form ausgestattet ist,
wobei der Kasten (300) einen Querschnitt in einer Höhenrichtung (H) aufweist, der mit einer in einer seitlichen Richtung verlaufenden Bodenwand (331) und einer bezüglich der Bodenwand (331) vertikal angeordneten Seitenwand (332) ausgestattet ist,
**dadurch gekennzeichnet, dass**
der Kasten (300) eine fortlaufend mit der Bodenwand (331) und der Seitenwand (332) ausgebildete Eckwand (333) aufweist, die die Bodenwand (331) und die Seitenwand (332) in einem sich kreuzenden Zustand verbindet, wobei ein Krümmungsradius R1 an einer der Verdampfungskammer (301) zugewandten Innenfläche (333i) der Eckwand (333) bezogen auf einen Krümmungsradius R2 des die Verdampfung fördernden Materials (500) größer ist, also eine Beziehung R1 > R2 zutrifft.

2. Verdampfer (200) für die Brennstoffzelle nach Anspruch 1, wobei sich eine Innenfläche der Bodenwand (331) mit zunehmendem Abstand von der Eckwand (333) abwärts neigt.

3. Verdampfer (200) für die Brennstoffzelle nach Anspruch 1 oder 2, wobei sich eine Innenfläche (332i) der Seitenwand (332) mit zunehmendem Abstand von der Eckwand (333) nach außen neigt.

4. Verdampfer (200) für die Brennstoffzelle nach einem der Ansprüche 1 bis 3, wobei das die Verdampfung fördernde Material (500) mit Keramik als Grundmaterial ausgebildet ist.

5. Verdampfer (200) für die Brennstoffzelle nach einem der Ansprüche 1 bis 4, wobei die Füllung (503) mehrere Arten der die Verdampfung fördernden Materialien (500) aufweist, die verschiedene Größen haben.

## Revendications

1. Evaporateur (200) pour une pile à combustible, comportant :
une boîte (300) pourvue de parois (302) formant une chambre d'évaporation (301), une entrée d'alimentation en eau (303) configurée pour délivrer de l'eau de reformage à la chambre d'évaporation (301), et une sortie de vapeur (304) configurée pour évacuer de la vapeur générée dans la chambre d'évaporation (301) vers une partie de reformage (310) ; et
une charge (503) contenue dans la chambre d'évaporation (301), la charge (503) étant constituée d'une pluralité de matières favorisant l'évaporation (500), chacune des matières favorisant l'évaporation (500) étant pourvue d'une forme sphérique,
la boîte (300) comprenant une section transversale dans une direction de hauteur (H) pourvue d'une paroi de fond (331) s'étendant dans une direction transversale, et d'un paroi latérale (332) disposée verticalement par rapport à la paroi de fond (331)
**caractérisé en ce que**
la boîte (300) comprend une paroi de coin (333) formée de manière continue avec la paroi de fond (331) et la paroi latérale (332), la paroi de coin (333) reliant la paroi de fond (331) et la paroi latérale (332) dans un état d'intersection, un rayon de courbure R1 au niveau d'une surface intérieure (333i) de la paroi de coin (333), la surface intérieure (333i) faisant face à la chambre d'évaporation (301), étant plus grand qu'un rayon de courbure R2 de la matière favorisant l'évaporation (500), c'est-à-dire qu'une relation R1 > R2 prévaut.

2. Evaporateur (200) pour la pile à combustible selon la revendication 1, dans lequel une surface intérieure de la paroi de fond (331) s'incline vers le bas avec une distance croissante depuis la paroi de coin (333).

3. Evaporateur (200) pour la pile à combustible selon les revendications 1 ou 2, dans lequel une surface intérieure (332i) de la paroi latérale (332) s'incline vers l'extérieur avec une distance croissante depuis la paroi de coin (333).

4. Evaporateur (200) pour la pile à combustible selon l'une quelconque des revendications 1 à 3, dans lequel la matière favorisant l'évaporation (500) est formée avec de la céramique comme matière de base.

5. Evaporateur (200) pour la pile à combustible selon l'une quelconque des revendications 1 à 4, dans lequel la charge (503) comprend plusieurs types de matières favorisant l'évaporation (500) ayant différentes tailles.
